# EUROPEAN PATENT APPLICATION

(11) **EP 3 422 633 A1**
(43) Date of publication of application: **02.01.2019**
(21) Application number: 17755776.6
(22) Date of filing: 20.02.2017
(51) Int. Cl.: H04L 12/24

(54) **NETWORK CONFIGURATION METHOD AND INTELLIGENT ROBOT**

(30) Priority: 23.02.2016 CN 201610099643
(71) Applicant: Yutou Technology (Hangzhou) Co., Ltd., Hangzhou City, Zhejiang 311199 (CN)
(72) Inventor: CHEN, Mingxiu, Hangzhou City Zhejiang 311199 (CN)
(74) Representative: AWA Sweden AB
(86) International application number: PCT/CN2017/074040
(87) International publication number: WO 2017/143947

(57) **Abstract**

Disclosed are a network configuration method and an intelligent robot, falling within the technical field of intelligent devices. The method comprises: step S1, forming replacement information in a pre-set format according to configuration information of a network configuration for the intelligent robot, and outputting the replacement information by using an external device; step S2, the intelligent robot receiving and parsing the replacement information so as to obtain and output a corresponding parsing result; step S3, the intelligent robot obtaining the configuration information by means of restoration according to the parsing result; and step S4, the intelligent robot conducting network configuration according to the configuration information, and subsequently loging out. The beneficial effects of the technical solution are: being able to simplify a network configuration process for an intelligent robot, being able to achieve the purpose of network configuration with only a relatively low cost, and ensuring the accuracy of network configuration information.

## Description

### Technical Field

The present invention relates to the technical field of intelligent devices, and particularly to a network configuration method and an intelligent robot.

### Background Technology

In existing technology, some intelligent devices especially a intelligent robot is seldom provided with a direct input device such as a keyboard to ensure overall aesthetics and other design requirements, leading to a relatively complex process of network configuration for intelligent robot in the case that a network configuration is able to be conducted only by inputting configuration information. On the other hand, even if the intelligent robot is provided with a certain inputting device, it is still complicated for a user to use the inputting device to input configuration information such as user login information, IP address information, subnet mask information, gateway information and DNS server information etc., also making it complex to conduct a network configuration for intelligent robot. Additionally, the process of conducting network configuration for intelligent robot will probably be repeated by a plurality of times, thus the user has to input configuration information by a plurality of times, making it more complicated for the user to operate the intelligent robot, and the mis-input of information may occur in the process of inputting, making it impossible to conduct the network configuration correctly and reducing user experience.

### Detailed Description of the Invention

In view of the foregoing problem existing in current technology, a network configuration method and an intelligent robot are provided to simplify a network configuration process for an intelligent robot, achieve the purpose of network configuration with only a relatively low cost, and ensure the accuracy of network configuration information.

The technical solution specifically includes:
A network configuration method applicable to an intelligent robot, characterized by comprising:
step S1, forming replacement information in a pre-set format according to configuration information of a network configuration for an intelligent robot, and outputting the replacement information by using an external device;
step S2, the intelligent robot receiving and parsing the replacement information so as to obtain and output a corresponding parsing result;
step S3, the intelligent robot obtaining the configuration information by means of restoration according to the parsing result;
step S4, the intelligent robot conducting network configuration according to the configuration information, and subsequently loging out.

Preferably, in this network configuration method, the pre-set format in the step S1 is a QR code format;
the external device is an intelligent terminal equipped with a display screen.

Preferably, in this network configuration method, the pre-set format in the step S1 is a sound wave format;
the external device is an intelligent terminal capable of playing sound wave.

Preferably, in this network configuration method, the pre-set format in the step S1 is a text format; the external device is an intelligent terminal equipped with a display screen.

Preferably, in this network configuration method, the intelligent robot is provided with an image capturing device;
the step S2 specifically comprising:
step S21a, displaying the replacement information in the QR code format on the display screen of the intelligent terminal;
step S22a, placing the intelligent terminal in the capturing area of the image capturing device of the intelligent robot;
step S23a, acquiring the image in the capturing area by the image capturing device, and determining whether the capturing area contains the replacement information in the QR code format;
   if so, receiving the replacement information and going to step S24;
   if not, returning to the step S23;
step S24a, parsing the replacement information and obtaining a corresponding parsing result, and subsequently going to the step S3.

Preferably, in this network configuration method, the intelligent robot is provided with a sound wave receiving device; and
a first parsing model for parsing sound wave is pre-trained and formed inside the intelligent robot;
the step S2 specifically comprising:
step S21b, playing the replacement information in the sound wave format by an external device;
step S22b, receiving the replacement information by the sound wave receiving device, and determining whether the receiving is successful;
   if not, returning to the step S22b;
step S23b, parsing the replacement information by the first parsing model so as to obtain a corresponding parsing result, and subsequently going to the step S3.

Preferably, in this network configuration method, the intelligent robot is provided with an image capturing device; and
a second parsing model for parsing text message is pre-trained and obtained in the intelligent robot; the step S2 specifically comprising:
step S21c, displaying the replacement information in the text format on the display screen of the intelligent terminal;
step S22c, placing the intelligent terminal in the capturing area of the image capturing device of the intelligent robot;
step S23c, acquiring the image in the capturing area by the image capturing device, and determining whether the capturing area contains the replacement information in the text format:
   if so, receiving the replacement information and going to step S24;
   if not, returning to the step S23;
step S24c, parsing the replacement information by the second parsing model and obtaining a corresponding parsing result, and subsequently going to the step S3.

Preferably, in this network configuration method, the parsing result in the step S2 is plaintext information related to the replacement information;
in the step S3, the corresponding configuration information is parsed and obtained according to the plaintext information.

An intelligent robot characterized by using the foregoing network configuration method.

The beneficial effects of the technical solution are: a network configuration method is provided to simplify a network configuration process for an intelligent robot, achieve the purpose of network configuration with only a relatively low cost, and ensure the accuracy of network configuration information.

### Description of the Drawings

Fig.1 is an overall flow diagram schematically showing a network configuration method in a preferred embodiment of the present invention;
Figs.2-4 is a specific flow diagram schematically showing a network configuration method in different embodiment of the present invention;

### Embodiments of the Invention

The technical solutions in the embodiments of the present invention will be clearly and completely described hereafter in reference to the drawings in the embodiments of the present invention. It is apparent that the described embodiments are merely a part of embodiments rather than all the embodiments of the present invention. Based on the embodiments in the present invention, all the other embodiments obtained by the artisans concerned without creation fall within the scope of claims of the present invention.

It should be noted that the embodiments in the present invention as well as the characteristics in the embodiments can be combined together without conflicting with each other.

The present invention will be further described in reference to attached drawings and embodiments, but they are not used as the limitation of the present invention.

In view of the foregoing problem existing in current technology, a network configuration method is provided in a preferred embodiment of the present invention to fit for intelligent devices especially intelligent robot.

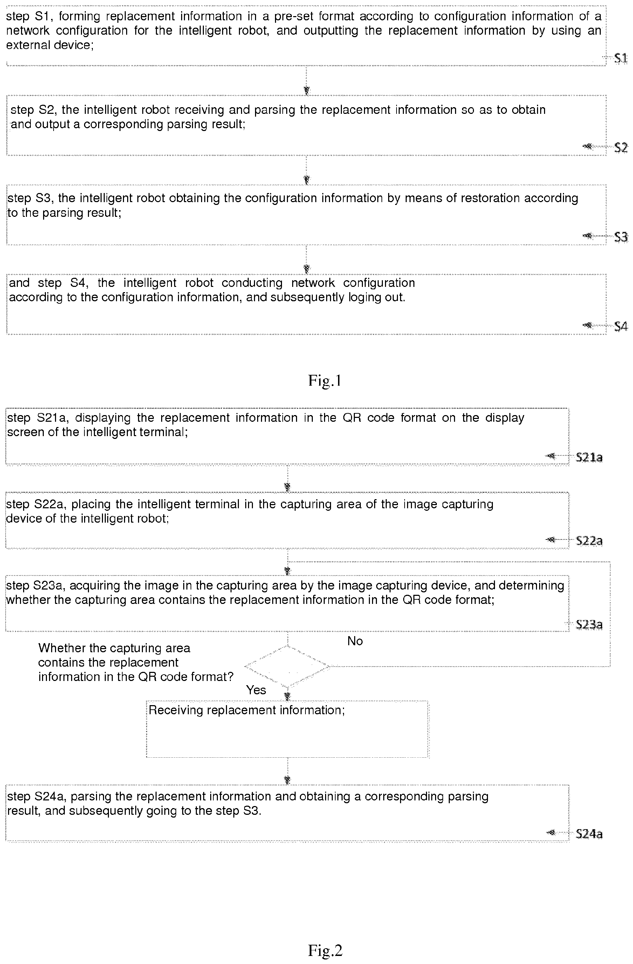

As shown in Fig.1, the specific steps of the network configuration method comprises:
step S1, forming replacement information in a pre-set format according to configuration information of a network configuration for the intelligent robot, and outputting the replacement information by using an external device;
step S2, the intelligent robot receiving and parsing the replacement information so as to obtain and output a corresponding parsing result;
step S3, the intelligent robot obtaining the configuration information by means of restoration according to the parsing result;
and step S4, the intelligent robot conducting network configuration according to the configuration information, and subsequently loging out.

Not all the intelligent robots are provided with an inputting device (e.g., keyboard etc.), so in the existing technology, it is usually difficult to input the information for network configuration such as user login information as well as other network configuration information into an intelligent robot to complete conventional network configuration. Therefore, the method is used in a specific embodiment, and in the step S1, firstly forming replacement information in a pre-set format according to configuration information, and outputting the replacement information by using an external device.

As mentioned above, the 'configuration information' may include not only user login information for network configuration such as user name and password, but also other network configuration information such as IP address, gateway information and the information related to DNS server.

As for the 'replacement information in a pre-set format', it is actually possible that the configuration information is replaced with the information in different pre-set format, and the content of the replacement information is completely consistent with that of previous configuration information, only differing in the form of information.

Specifically, the pre-set format may include one of the following:
1) QR Code Format By means of this pre-set format, configuration information is outputted as the replacement information in QR code format. In this pre-set format, the external device may be an intelligent terminal equipped with a display screen. Specifically, the intelligent terminal may be a mobile terminal with display screen such as mobile phone or tablet PC.
2) Sound Wave Format By means of this pre-set format, configuration information is outputted as the replacement information in speech sound wave format. In this pre-set format, the external device may be an intelligent terminal capable of playing sound wave. Specifically, the intelligent terminal may be a mobile terminal capable of playing speech sound wave such as mobile phone or tablet PC.
3) Text Format By means of this pre-set format, configuration information is converted to corresponding characters, and the replacement information in a text format is formed and outputted. In this pre-set format, the external device may be an intelligent terminal equipped with a display screen. Specifically, the intelligent terminal may be a mobile terminal with display screen such as mobile phone or tablet PC.

The three pre-set formats mentioned above are the most common format for replacement information in practical use, and other embodiments may also include other different pre-set formats suitable for replacement information, and their detailed description will be omitted herein.

In the step S2 of this embodiment, based on the different pre-set formats for replacement information, the intelligent robot uses different methods to receive and parse replacement information so as to obtain corresponding parsing result. Specifically, at the time of forming replacement information, an encryption process is added in, i.e., firstly encrypting the configuration information, and subsequently converting the encrypted configuration information to the replacement information in pre-set format. Therefore, the 'parsing result' may actually be the plaintext information corresponding to the replacement information, i.e., obtaining the encrypted configuration information by means of parsing. Then, in the step S3, decrypting the plaintext information according to previous encryption process so as to obtain configuration information by means of restoration. Specifically, it is possible to encrypt configuration information by key before the generation of replacement information, decrypt plaintext information by corresponding key at the time of parsing result restoration, and finally obtain the configuration information.

In the step S4 of this embodiment, the intelligent robot finally conducts configuration for network according to the configuration information obtained by means of parsing so as to enable the intelligent robot to be connected to external network.

In another preferred embodiment of this invention, when the pre-set format is QR code format, the intelligent robot is provided with an image capturing device (e.g. camera device).

As shown in Fig.2, the step S2 specifically comprises:
step S21a, displaying the replacement information in the QR code format on the display screen of the intelligent terminal;
step S22a, placing the intelligent terminal in the capturing area of the image capturing device of the intelligent robot;
step S23a, acquiring the image in the capturing area by the image capturing device, and determining whether the capturing area contains the replacement information in the QR code format;
   if so, receiving the replacement information and going to step S24;
   if not, returning to the step S23;
step S24a, parsing the replacement information and obtaining a corresponding parsing result, and subsequently going to the step S3.

Specifically, in the preferred embodiment of this invention, firstly displaying the replacement information in QR code format on the intelligent terminal, e.g., on the display screen of mobile terminal. Subsequently, placing the intelligent terminal displayed with QR code in the capturing area of the image capturing device of the intelligent robot. For instance, placing the intelligent terminal displayed with QR code just in front of the camera of the intelligent robot so that the intelligent robot conducts recognition via the camera.

Subsequently, acquiring the image in the capturing area by the image capturing device, and determining whether the capturing area contains the replacement information in the QR code format: if so, receiving the replacement information and going to next step; if not, returning to the step S23 and continuing acquiring image in the capturing area; Specifically, in the step S23, the way that the image capturing device determines the QR code and acquires image in the capturing area may be scanning, i.e., scanning the whole capturing area (usually is the area of viewfinder or a fixed area smaller than viewfinder) in a certain scanning sequence (usually from top to bottom), and if QR code information is found after scanning, the QR code information will be acquired directly; if QR code information has not been found, the notice 'QR code information not found' will be outputted after the completion of the scanning for the whole capturing area, and subsequently the scanning for the capturing area will be continued.

In a preferred embodiment of this invention, the QR code will be parsed after the replacement information in QR code format is obtained by scanning so as to obtain corresponding plaintext information, and subsequently the plaintext information will be decrypted or decoded to finally obtain the configuration information corresponding to the plaintext information.

In a preferred embodiment of this invention, when the pre-set format is sound wave format, it is possible to install a sound wave receiving device (e.g. sound pick-up) in the intelligent robot and conduct pre-training to form a first parsing model at the same time for the purpose of parsing the sound wave received subsequently. The training process of the first parsing model may be realized by pre-inputting a plurality of different sound wave training samples, and its detailed description will be omitted herein.

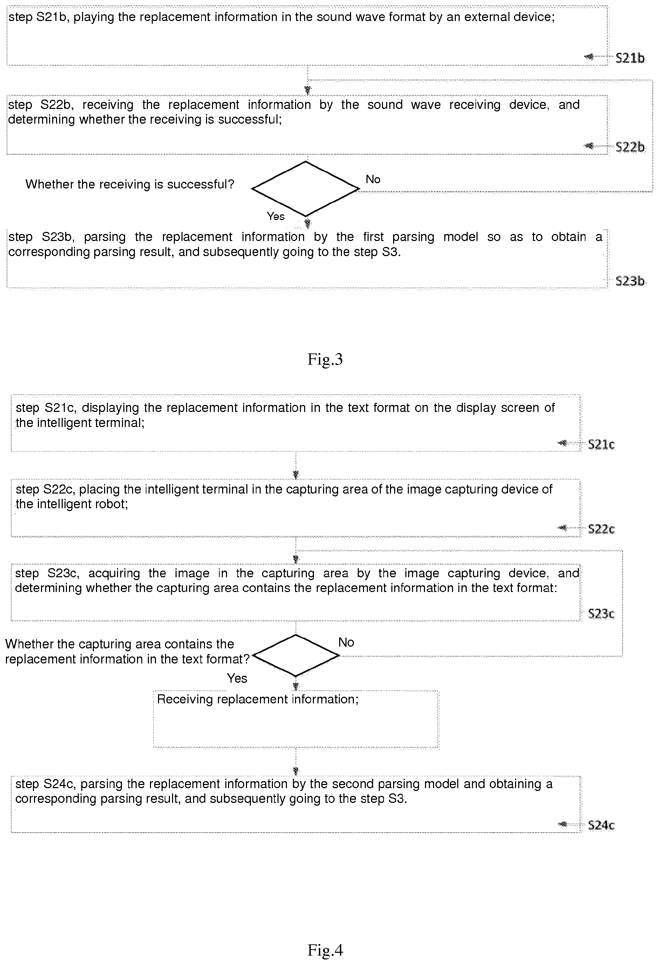

In a preferred embodiment of this invention, under the foregoing circumstance, as shown in Fig.3, the step S2 specifically comprises:
step S21b, playing the replacement information in the sound wave format by an external device;
step S22b, receiving the replacement information by the sound wave receiving device, and determining whether the receiving is successful;
   if not, returning to the step S22b;
step S23b, parsing the replacement information by the first parsing model so as to obtain a corresponding parsing result, and subsequently going to the step S3.

Specifically, in a preferred embodiment of this invention, firstly playing the replacement information in sound wave format by external device, e.g., recording the replacement information into a mobile terminal and playing the replacement information by the speaker of the mobile terminal.

Subsequently, in a preferred embodiment of this invention, receiving the replacement information in sound wave format from the speaker by means of the sound wave receiving device (sound pick-up such as microphone) on the intelligent robot, and at the same time determining whether the replacement information has been successfully received (e.g., determining whether the received sound wave information contains the replacement information); if so, going to step S23b; if not, returning to the step S22b, i.e., continuing trying to receive the replacement information in sound wave format from outside.

In a preferred embodiment of this invention, the intelligent robot will parse the replacement information by the pre-trained first parsing model after receiving the replacement information in sound wave format so as to obtain corresponding parsing result, i.e., obtain corresponding plaintext information by means of parsing. Subsequently, in a preferred embodiment of this invention, the configuration information will finally obtained by means of restoration according to the parsing result, and network configuration will be conducted for intelligent robot according to the configuration information.

In a preferred embodiment of this invention, when the pre-set format is text format, the intelligent robot may include an image capturing device (e.g., a camera installed on the intelligent robot), and a second parsing model for parsing the replacement information in text format is pre-installed inside the intelligent robot. Similar to the way mentioned above, the second parsing model is learned and obtained by inputting a large amount of training samples, e.g., the parsing result of different text information will be learned and obtained by a plurality of training samples in text format.

In a preferred embodiment of this invention, under the foregoing circumstance, as shown in Fig.4, the step S2 specifically comprises:
step S21c, displaying the replacement information in the text format on the display screen of the intelligent terminal;
step S22c, placing the intelligent terminal in the capturing area of the image capturing device of the intelligent robot;
step S23c, acquiring the image in the capturing area by the image capturing device, and determining whether the capturing area contains the replacement information in the text format:
   if so, receiving the replacement information and going to step S24;
   if not, returning to the step S23;
step S24c, parsing the replacement information by the second parsing model and obtaining a corresponding parsing result, and subsequently going to the step S3.

Specifically, in a preferred embodiment of this invention, firstly trying to capture the replacement information probably existing within the capturing area in text format by means of the image capturing device on intelligent terminal (e.g., mobile terminal): if captured, the replacement information in text format will be received and recognized directly, and it will go to step S23c; if not, it will return to the step S22c, i.e., continuing using the image capturing device to try to capture the replacement information in text format.

Subsequently, in a preferred embodiment of this invention, the replacement information will be parsed by means of the pre-trained second parsing model after capturing the replacement information so as to obtain corresponding parsing result (i.e., plaintext information). Subsequently, the configuration information will finally be obtained by means of restoration according to the parsing result, and network configuration will be conducted for intelligent robot according to the configuration information.

In conclusion, the technical solution of this invention provides a network configuration method capable of converting the relevant information of network configuration to the information format easily recognized by intelligent robot (e.g., QR code, sound wave or text format, etc.), and the intelligent robot conducts easy recognition by means of its own devices, i.e., reading the configuration information contained therein and conducting corresponding network configuration so as to enable the intelligent robot to conduct a quick network configuration and connection.

Accordingly, the replacement information can be reused and can ensure accuracy and one-to-one correspondence at the time of the conversion, so inputting configuration information to intelligent robot by means of the replacement information in different pre-set format is capable of ensuring the accuracy of network configuration information.

In a preferred embodiment of this invention, an intelligent robot is also provided which uses the foregoing network configuration method.

The description above is only a preferred embodiment of this invention, and thus will not limit the embodiments and the protection scope of this invention. As is realized by those in the art, any solution obtained by making equivalent replacements and obvious changes on the basis of the description of this invention as well as drawings shall be included in the protection scope of this invention.

## Claims

1. A network configuration method applicable to an intelligent robot, **characterized by** comprising:
step S1, forming replacement information in a pre-set format according to configuration information of a network configuration for the intelligent robot, and outputting the replacement information by using an external device;
step S2, the intelligent robot receiving and parsing the replacement information so as to obtain and output a corresponding parsing result;
step S3, the intelligent robot obtaining the configuration information by means of restoration according to the parsing result;
step S4, the intelligent robot conducting network configuration according to the configuration information, and subsequently loging out.

2. The network configuration method according to claim 1, wherein the pre-set format in the step S1 is a QR code format;
the external device is an intelligent terminal equipped with a display screen.

3. The network configuration method according to claim 1, wherein the pre-set format in the step S1 is a sound wave format;
the external device is an intelligent terminal capable of playing sound wave.

4. The network configuration method according to claim 1, wherein the pre-set format in the step S1 is a text format;
the external device is an intelligent terminal equipped with a display screen.

5. The network configuration method according to claim 2, wherein the intelligent robot is provided with an image capturing device;
the step S2 specifically comprising:
step S21a, displaying the replacement information in the QR code format on the display screen of the intelligent terminal;
step S22a, placing the intelligent terminal in the capturing area of the image capturing device of the intelligent robot;
step S23a, acquiring the image in the capturing area by the image capturing device, and determining whether the capturing area contains the replacement information in the QR code format;
if so, receiving the replacement information and going to step S24;
if not, returning to the step S23;
step S24a, parsing the replacement information and obtaining a corresponding parsing result, and subsequently going to the step S3.

6. The network configuration method according to claim 3, wherein the intelligent robot is provided with a sound wave receiving device; and
a first parsing model for parsing sound wave is pre-trained and formed inside the intelligent robot; the step S2 specifically comprising:
step S21b, playing the replacement information in the sound wave format by an external device;
step S22b, receiving the replacement information by the sound wave receiving device, and determining whether the receiving is successful;
if not, returning to the step S22b;
step S23b, parsing the replacement information by the first parsing model so as to obtain a corresponding parsing result, and subsequently going to the step S3.

7. The network configuration method according to claim 4, wherein the intelligent robot is provided with an image capturing device; and
a second parsing model for parsing text message is pre-trained and obtained in the intelligent robot; the step S2 specifically comprising:
step S21c, displaying the replacement information in the text format on the display screen of the intelligent terminal;
step S22c, placing the intelligent terminal in the capturing area of the image capturing device of the intelligent robot;
step S23c, acquiring the image in the capturing area by the image capturing device, and determining whether the capturing area contains the replacement information in the text format:
if so, receiving the replacement information and going to step S24;
if not, returning to the step S23;
step S24c, parsing the replacement information by the second parsing model and obtaining a corresponding parsing result, and subsequently going to the step S3.

8. The network configuration method according to claim 1, wherein the parsing result in the step S2 is plaintext information related to the replacement information;
in the step S3, the corresponding configuration information is parsed and obtained according to the plaintext information.

9. An intelligent robot **characterized by** using the network configuration method of claims 1-8.
